# EUROPEAN PATENT SPECIFICATION

(11) **EP 1 090 095 B1**
(45) Date of publication and mention of the grant of the patent: **19.03.2003**
(21) Application number: 98940697.0
(22) Date of filing: 24.04.1998
(51) Int. Cl.: C10L 5/20, C10L 5/44

(54) **COMPOSITION FOR MANUFACTURE OF FUEL BRIQUETTES**
ZUSAMMENSETZUNG ZUR HERSTELLUNG VON BRENNSTOFF-BRIKETTS
COMPOSITION SERVANT A FABRIQUER DES BRIQUETTES DE COMBUSTIBLE

(43) Date of publication of application: 11.04.2001
(73) Proprietor: Myasoedova, Vera Vasilievna, Moscow, 123627 (RU)
(72) Inventor: MYASOEDOVA, Vera Vasilievna, Moscow, 123627 (RU); ARTEMOV, Arseny Valerievich, Moscow, 125183 (RU)
(74) Representative: Patentanwälte Zellentin & Partner
(86) International application number: RU9800122
(87) International publication number: WO99055806

(56) References cited:
- WO-A-92/20766
- WO-A-97/00307
- CA-A- 1 067 286
- GB-A- 847 502
- US-A- 3 684 465
- US-A- 4 612 017

## Description

### Field of the invention

The present invention relates to the fields of fuel industry and utilization of waste from woodworking, paper and pulp, coal and peat mining industries, and particularly to compositions for manufacture of fuel briquettes.

### Description of the Background

Known is composition for manufacture of fuel briquettes comprising culled wood from peat mosses (75 -:-96 mass%) and peat dust (4-:-25 mass%) or culled wood from peat mosses (70 mass%) and brown coal (30%) (SU, Nº 1458377; SU Nº 1659452).

For manufacture of such briquettes initial components are dried at 90- 100° C, mixed and from the resultant mixture briquettes are molded at temperature 180° C and higher under pressure 40-:-70 mPa (SU, Nº 1458377).

As another embodiment components are mixed, the resultant mixture is dried at 700 °C up to moisture content of 6%, then briquettes are pressed from mixture at pressure of about 90 mPa (SU, Nº 1659452). Manufactured fuel briquettes have calorific value of 5000 kcal/kg, ash content of such briquettes varies from 3-:-12%.

Known is composition for manufacture of fuel briquettes comprising wood secondary raw stock - sawdust, shavings in the quantity of 87-97 mass% and 1-5% water suspension of spoilage in the quantity of 1-13 mass%. For manufacture of fuel briquettes the said components are thoroughly mixed to obtain homogeneous mass, then briquettes are molded from mass at specific pressure of 0.03 - 0.05 mPa that are then dried to residual moisture content of 2-10% (SU, Nº 1726498). Manufactured fuel briquettes have calorific value up to 3000 kcal/kg, ash content of such briquettes makes up 5 - 6%.

Known is also composition for manufacture of fuel briquettes containing 78-85 mass % of birch bark crushed to 3-20 mm particles and 15-25 mass% of water-proof protein gum, including rennin casein, albumin, lime, sodium silicate solution (SU Nº 1715828). For manufacture of fuel briquettes from the said composition they are molded at 110-120° C, specific pressure 1.8-2.5 mPa per 1 mm of thickness of manufactured briquette. Density of manufactured briquettes of 300 x 60 x 30 mm is 710 kg/m³, calorific value - up to 20800 J/kg (4 964 kcal/kg), ash content does not exceed, as rule, 1.7%.

The above enumerated compositions for manufacture of fuel briquettes call for their development of either rather expensive or difficultly available components or briquettes manufactured from such compositions emanate toxic substances when burning.

Known is also the use of carbon-containing feed stock: sawdust, shavings, graphite, carbon black, coke and dextrin water solution of dextrin as binder, sulfite liquor in compositions for manufacture of heat insulating boards (CzSSR, Nº 264665, IPC⁴ C 04 B38/06, pub. 14.12.90).

### Summary of the invention

The task of developing composition for manufacture of fuel briquettes from available ecological raw materials, of whose main consumer's parameters (calorific value, density, strength, ash content) would remain at the high level, was used as a basis for the said invention.

Proposed is composition for manufacture of fuel briquettes including crushed secondary carbon-containing feed stock and binder where the secondary carbon-containing feed stock used is petroleum pitch, coal pitch, coal crushed product, crushed peat, wood shavings, sawdust, or their mixes, and as binder - lignin-containing product selected from group: lignin, lignosulfonate, hydrolytic lignin, black sulfate liquor or their mixes or mix of one or several above enumerated lignin-containing products with α-cellulose.

Composition contains carbon-containing feed stock and lignin-containing product at ratio, mass%:

| | |
|---|---|
| carbon-containing feed stock | 63.1-97.6% |
| lignin-containing product | 2.4-36.9% |

The composition also comprises a binder mix of one or several lignin-containing products to α-cellulose at ratio, accordingly, (1-32) : 1.

Unexpectedly it was found out that for manufacture of fuel briquettes as binder in the composition can be used lignin-containing products that are readily available production wastes. For instance, wood processing at paper and pulp enterprises only in Russia give annually nearly 40 mill.t of lignin, 5 mill. t of lignosulfonates, 3.5 mill.t of technical hydrolytic lignin. Of this amount of lignin-containing products only 0.1% (plastic fillers, rubber articles, building materials, agriculture) are used regularly, the remaining products are either burned in the open air or dumped. The indubitable advantage of lignin-containing products from the point of view of their possible industrial processing is capacity to biodecomposition and low toxicity.

The basis for composition for manufacture of fuel briquettes is crushed secondary carbon-containing feed stock selected from group: petroleum pitch, coal pitch, coal crushed product, crushed peat, wood shavings, sawdust or their mix.

Composition comprises as binder: lignin, lignosulfonate, hydrolytic lignin, black sulfate liquor, or their mixes or mix of one or several above enumerated lignin-containing products with a-cellulose at mass ratio of **lignin-containing product: α-cellulose equaling** (1-32) : 1 with mass ratio of **secondary carbon-containing feed stock: binder** equaling (63.1-97.6): (2.4-36.9).

Fuel briquettes manufactured on the basis of the proposed composition have calorific value up to 7000 cal/g, ash content 0.8-1.2% and density of briquette - 1.04-1.18 g/cm³.

It is preferable to use as binder lignosulfonates with dry basis of 46.0-76.0 mass%, ash content of 0.8-1.3 mass% and insoluble substances in mass of dry products 0.8-1.3 mass%.

It is the most feasible to use lignosulfonates preliminary oxidized in acid medium at 120 - 150° C.

In some cases to increase strength and to improve hydrophobic properties of fuel briquettes in the open air paraffin in the quantity of 0.5-2.5 mass% is introduced in the binder.

Secondary carbon-containing feed stock is used mainly as particles of whose size does not exceed 85% of the minimal size of manufactured briquettes.

α-Cellulose being a binder component has the following characteristics: molecular mass of elementary link of α-cellulose is 162, polymerization - 600-1000.

α-cellulose may be present in composition as powder-like native cellulose, for instance, wood cellulose, cotton or flax cellulose, where content of α-cellulose is usually 77- 98.5 mass %. When using powder-like wood cellulose as cellulose source it is practicable to use the product with the following characteristics:

| | |
|---|---|
| **content of α-cellulose** | **77%** |
| **ash content** | **0.3%** |
| | |
| **bulk density** | **140-160 g/dm**^{**3**} |
| | |
| **size of particles** | **100-160 µ** |
| | |
| **moisture content** | **< 0.7%** |

Lignin, binder, is produced from black sulfate liquor by acidifying 2.5 M solution of sulfuric acid up to pH 1.8 - 4.6 with mixing (4200- 5300 r.p.m.) and temperature 60-65° C. Two minutes after precipitated lignin is filtered, washed off and dried in vacuum at 60° C. To obtain fine dispersion of lignin characterized by higher binding properties 12-18% of lignin extracted from black sulfate liquor are mixed in water solution with 2-15 moles of ammonia, 4-12 moles of formaldehyde and 0.25-1.25 moles of NaOH or KOH per 1 mole of lignin. Solution is heated up to 65° C during time sufficient for lignin mixing and formation of colloid suspension of lignin particles of homogeneous form and size. In the process of reaction lignin becomes insoluble and precipitates.

### Lignosulfonates as binder components are derived in the following way:

When producing cellulose according to the acid sulfite method wood is heated at 130-140° C with pulp cooking acid (water solution containing 2-10% of free sulfuric acid and 1.3-2.5% of calcium sulfate). In the process of cooking sulfurization of lignin occurs and all lignin and a greater part of cellulose associated carbons goes into solution. Lignosulfonates represent polydisperse system with the wide range of molecular masses (2000- 100000). They are water soluble (α = 0.6) and behave as strong mineral acids. Free acids are derived from calcium salts by treating with sulfuric acid or dialysis with subsequent ion exchange. After drying or evaporation gray-brown powder of lignosulfonate is produced. From solutions it is deposited as salts of heavy metals or aromatic amines. Sulfite-cellulose production wastes comprises mainly ammonium, sodium and calcium salts of lignosulfonates, lignosulfonic acids and sugars that after processing give sulfite-alcohol spent wash plentiful of water that is evaporated and lignosulfonates are derived. Depending on content of dry substances commercial technical lignosulfonates are produced with the following brands of whose basic characteristics are given in Table 1.

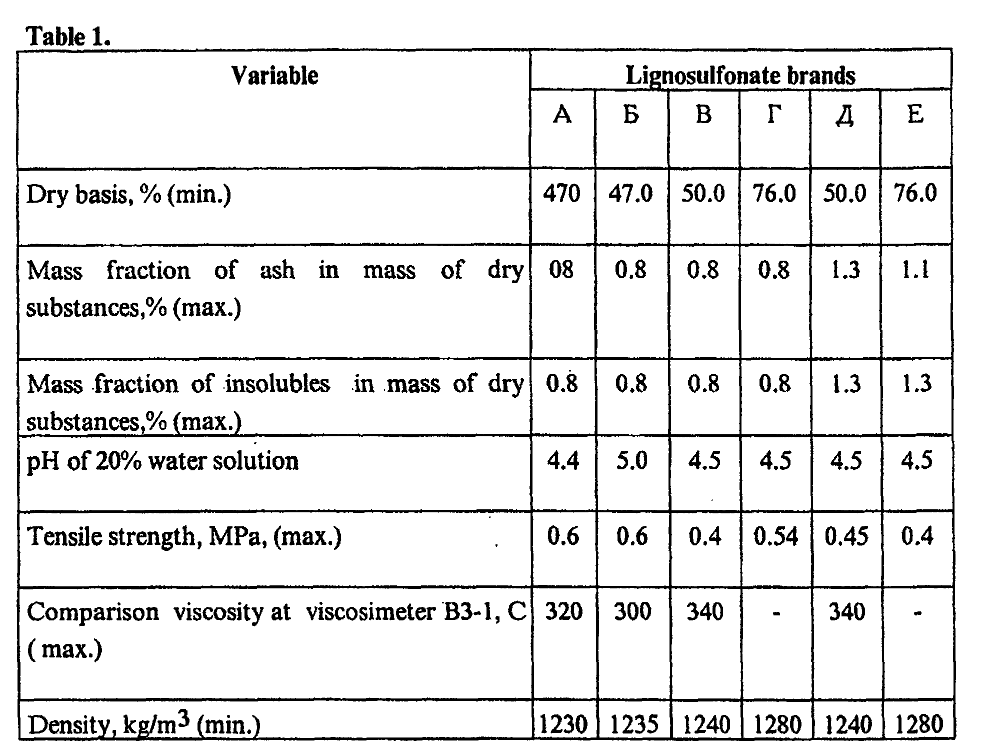

During oxidation of lignosulfonates by oxygen at 120- 1500° C in acid medium content of carbonyl groups is increased (∼50%), content of aliphatic and phenol OH-groups is significantly reduced. Oxidized lignosulfonates are hardened with hot pressing (110-150° C) during which low molecular fractions of lignosulfonates are self-condensed up to high-molecular particles with a large number of cross-linkages, this resulting in formation of rubber-like products featuring high water-proofness.

Black sulfate liquor is produced from cooking leaf or needle wood, then treated at 65-70° C during 20-40 min. by means of orthophosphoric acid up to pH = 2.5-3.5, from reaction mass lignin is extracted by filtration or centrifuging, then it is dried to obtain commercial product. The initial black sulfate liquor has the following composition:

| | |
|---|---|
| **organics** (including ionogenic - 34.8% non-ionic - 27.0%) | **61.8 mass %** |
| **soluble mineral components** | **38.1 mass %** |
| | |
| | |
| **insoluble mineral components (ash portion)** | **42.9 mass %** |

Black sulfate liquor is derived by treating water solution with 10% CaCl₂ solution, sediment is filtered, washed off and dried at 120° C and cooled.

In the proposed composition α-cellulose in mix with lignin-containing product at ratio, accordingly, 1 : (1- 32) with mass ratio of carbon-containing feed stock: binder being equal to (63.1- 97.6) : (2.4- 36.9) is used.

Non-observance of such ratios affects adversely the capacity of the composition to compress, i.e. fuel briquettes will be loose, crumbly, their density will be insufficient to ensure strength that interacts directly with the calorific value of fuel.

### Method of manufacture of fuel briquettes on the basis of the proposed composition

Wood shavings, sawdust, petroleum and/or coal pitch, their crumbs, dust with size of particles not exceeding 85% from the minimal size of the briquette and content of free moisture 16- 28% are mixed with binder selected from the group: lignin, lignosulfonate, hydrolytic lignin, black sulfate liquor or their mixes or mix of one or several above enumerated lignin-containing products with α-cellulose; mix is thoroughly agitated and molded by pressing into briquettes, for instance, as blocks of 46- 63 mm diameter and 23 mm high. Pressing is done at pressure 85 atm., min. Whenever required preheating up to 350° C is used.
Pressing under pressure below 85 atm. does not allow to reach the density and strength of briquettes that have calorific value of 7000 cal/g and optimal burning kinetics. At the same time it is unpracticable to considerably raise the said pressure value due to drastic increase in consumption of utilities.

Below are examples of manufacture of fuel briquettes from various compositions.

### Example 1. (Comparative)

Leaf and needle wood shavings and sawdust were dried to moisture content of 16- 20 % and in the quantity of 96 kg are mixed with 4 kg of binder, lignosulfonate of brand B, with dry basis of 50%, ash content of 0.8%, fraction of insolubles in mass of dry substances of 0.8%. Before mixing 1% of paraffin was added to binder. Mixing was done with speed of 20- 60 r.p.m. to form relatively homogeneous mass that was then sent to the mold and under pressure of 85 atm. briquettes with diameter of 63 mm and height of 23 mm were molded.

### Example 2. (Comparative)

Leaf and needle wood shavings and sawdust were dried to moisture content of 16- 20% and in the quantity of 96 kg were mixed with 4 kg of binder, lignosulfonate of brand B, with dry basis of 46%, ash content of 0.8%, fraction of insolubles in mass of dry substances of 0.8%. Before mixing 1% of paraffin was added to binder. Mixing was done with speed of 20- 60 r.p.m. to form relatively homogeneous mass that was then sent to the mold and under pressure of 85 atm. briquettes with diameter of 63 mm and height of 23 mm were molded.

### Example 3. (Comparative)

Leaf and needle wood shavings and sawdust were dried to moisture content of 16- 20% and in the quantity of 96 kg were mixed with 4 kg of binder, lignosulfonate of brand B, with dry basis of 76%, ash content of 1.1%, fraction of insolubles in mass of dry substances of 1.3%. Before mixing 1% of paraffin was added to binder. Mixing was done with speed of 20- 60 r.p.m. to form relatively homogeneous mass that is then sent to the mold and under pressure of 85 atm. briquettes with diameter of 63 mm and height of 23 mm were molded.

### Example 4. (Comparative)

Leaf and needle wood shavings and sawdust were dried to moisture content of 16- 20% and in the quantity of 96 kg were mixed with 4 kg of binder, lignosulfonate of brand B, with dry basis of 50%, ash content of 0.8%, fraction of insolubles in mass of dry substances of 0.8%. Before mixing 0.5% of paraffin was added to binder. Mixing was done with speed of 20- 60 r.p.m. to form relatively homogeneous mass that is then sent to the mold and under pressure of 85 atm. briquettes with diameter of 63 mm and height of 23 mm were molded.

### Example 5. (Comparative)

Leaf and needle wood shavings and sawdust were dried to moisture content of 16- 20 % and in the quantity of 96 kg were mixed with 4 kg of binder, lignosulfonate of brand B, with dry basis of 50%, ash content of 0.8%, fraction of insolubles in mass of dry substances of 0.8%. Before mixing 2.5% of paraffin was added to binder. Mixing was done with speed of 20- 60 r.p.m. to form relatively homogeneous mass that is then sent to the mold and under pressure of 85 atm. briquettes with diameter of 63 mm and height of 23 mm were molded.

### Example 6. (Comparative)

Mix of coal and petroleum pitches (1:1) were dried to moisture content of 16- 20% and in the quantity of 97.6 kg were mixed with 2.4 kg of binder, lignosulfonate, with dry basis of 76%, ash content of 1.1%, fraction of insolubles in mass of dry substances of 1.3%. Mixing was done with speed of 20- 60 r.p.m. to form relatively homogeneous mass that was then sent to the mold and under pressure of 95 atm. briquettes with diameter of 63 mm and height of 23 mm were molded.

### Example 7. (Comparative)

Leaf and needle wood shavings, sawdust and coal dust (1:1) were dried to moisture content of 16- 20% and in the quantity of 97.6 kg were mixed with 4 kg of binder, lignosulfonate with dry basis of 76%, ash content of 1.1%, fraction of insolubles in mass of dry substances of 1.3%. Before mixing 1% of paraffin was added to binder. Mixing was done with speed of 20- 60 r.p.m. to form relatively homogeneous mass that is then sent to the mold and under pressure of 95 atm. briquettes with diameter of 63 mm and height of 23 mm were molded.

### Example 8.

Leaf and needle wood shavings, sawdust and coal dust (1:1) were dried to moisture content of 16- 20% and in the quantity of 97.6 kg were mixed with 2.4 kg of binder, lignosulfonate + α-cellulose (1:1) with dry basis of 50%, ash content of 0.8%, fraction of insolubles in mass of dry substances of 0.8%. Before mixing 1% of paraffin was added to binder. Mixing is done with speed of 20- 60 r.p.m. to form relatively homogeneous mass that was then sent to the mold and under pressure of 85 atm. briquettes with diameter of 63 mm and height of 23 mm. were molded.

### Example 9.

Leaf and needle wood shavings, sawdust and coal dust (1:1) were dried to moisture content of 16- 20% and in the quantity of 97.6 kg were mixed with 2.4 kg of binder, lignosulfonate + α-cellulose (1:15) with dry basis of 50%, ash content of 0.8%, fraction of insolubles in mass of dry substances of 0.8%. Before mixing 1% of paraffin was added to binder. Mixing was done with speed of 20- 60 r.p.m. to form relatively homogeneous mass that was then sent to the mold and under pressure of 85 atm. briquettes with diameter of 63 mm and height of 23 mm were molded.

### Example 10.

Leaf and needle wood shavings, sawdust and coal dust (1:1) were dried to moisture content of 16- 20% and in the quantity of 97.6 kg were mixed with 2.4 kg of binder, lignosulfonate + α-cellulose (1:32) with dry basis of 50%, ash content of 0.8%, fraction of insolubles in mass of dry substances of 0.8%. Before mixing 1% of paraffin was added to binder. Mixing was done with speed of 20- 60 r.p.m. to form relatively homogeneous mass that is then sent to the mold and under pressure of 85 atm. briquettes with diameter of 63 mm and height of 23 mm were molded.

### Example 11.

Leaf and needle wood shavings, sawdust and coal dust (1:1) were dried to moisture content of 16- 20 % and in the quantity of 97.6 kg were mixed with 2.4 kg of binder, lignosulfonate + α-cellulose (1:10 ) with dry basis of 50%, ash content of 0.8%, fraction of insolubles in mass of dry substances of 0.8%. Mixing was done with speed of 20- 60 r.p.m. and at temperature 120° C to form relatively homogeneous mass that was then sent to the mold and under pressure of 85 atm. briquettes with diameter of 63 mm and height of 23 mm were molded.

### Example 12.

Leaf and needle wood shavings, sawdust and coal dust (1:1) were dried to moisture content of 16- 20% and in the quantity of 97.6 kg were mixed with 2.4 kg of binder, lignosulfonate + α-cellulose (1:10) with dry basis of 50%, ash content of 0.8%, fraction of insolubles in mass of dry substances of 0.8%. Mixing was done with speed of 20- 60 r.p.m. and at temperature 200° C to form relatively homogeneous mass that was then sent to the mold and under pressure of 85 atm. briquettes with diameter of 63 mm and height of 23 mm were molded.

### Example 13.

Leaf and needle wood shavings, sawdust and coal dust (1:1) were dried to moisture content of 16- 20 % and in the quantity of 97.6 kg were mixed with 2.4 kg of binder, lignosulfonate + α-cellulose (1:10) with dry basis of 50%, ash content of 0.8%, fraction of insolubles in mass of dry substances of 0.8%. Mixing was done with speed of 20- 60 r.p.m. and temperature 250° C to form relatively homogeneous mass that was then sent to the mold and under pressure of 85 atm. briquettes with diameter of 63 mm and height of 23 mm. were molded

### Example 14.

Leaf and needle wood shavings, sawdust and coal dust (1:1) are dried to moisture content of 16- 20 % and in the quantity of 97.6 kg are mixed with 2.4 kg of binder, lignosulfonate + α-cellulose (1:10) with dry basis of 50%, ash content of 0.8%, fraction of insolubles in mass of dry substances of 0.8%. Mixing is done with speed of 20- 60 r.p.m. and temperature 350° C to form relatively homogeneous mass that is then sent to the mold and under pressure of 85 atm. make briquettes with diameter of 63 mm and height of 23 mm.

### Example 15.

Leaf and needle wood shavings, sawdust and coal dust (1:1) were dried to moisture content of 16- 20% and in the quantity of 63.1 kg were mixed with 36.9 kg of binder, lignosulfonate + α-cellulose (1:10 ) with dry basis of 50%, ash content of 0.8%, fraction of insolubles in mass of dry substances of 0.8%. Mixing was done with speed of 20- 60 r.p.m. and temperature 200° C to form relatively homogeneous mass that was then sent to the mold and under pressure of 85 atm. briquettes with diameter of 63 mm and height of 23 mm were molded.

### Example 16. (Comparative)

Leaf and needle wood sawdust, crushed coal product and crushed peat were dried to moisture content of 16- 20 % and in the quantity of 75.0 kg were mixed with 25 kg of binder, lignin. Paraffin in the quantity of 1 mass% was added and mixed with speed of 20- 60 r.p.m. and temperature 20- 24° C to form relatively homogeneous mass that was then sent to the mold and under pressure of 85 atm. briquettes with diameter of 63 mm and height of 23 mm were molded.

### Example 17. (Comparative)

Crushed peat was dried to moisture content of 16- 20% and in the quantity of 75.0 kg were mixed with 25 kg of binder, hydrolytic lignin. Paraffin in the quantity of 1 mass% was added and mixed with speed of 20- 60 r.p.m. and temperature 20- 24° C to form relatively homogeneous mass that was then sent to the mold and under pressure of 95 atm. briquettes with diameter of 63 mm and height of 23 mm were molded.

### Example 18

Crushed coal product and coal dust were dried to moisture content of 16- 20 % and in the quantity of 75.0 kg were mixed with 25 kg of binder, mix of lignin, lignosulfonate + α-cellulose (1:1) with dry basis of 50%, ash content of 0.8%, fraction of insolubles in mass of dry substances of 0.8%. Paraffin in the quantity of 1% was added and mixed with speed of 20- 60 r.p.m. and temperature 20- 24° C to form relatively homogeneous mass that was then sent to the mold and under pressure of 85 atm. briquettes with diameter of 63 mm and height of 23 mm. were molded.

### Example 19. (Comparative)

Leaf and needle wood shavings and sawdust were dried to moisture content of 16- 20 % and in the quantity of 75 kg were mixed with 25.0 kg of binder, lignin + lignosulfonate, with dry basis of 50%, ash content of 0.8%, fraction of insolubles in mass of dry substances of 0.8%. Mixing was done with speed of 20- 60 r.p.m. at temperature 20- 24° C to form relatively homogeneous mass that was then sent to the mold and under pressure of 85 atm. briquettes with diameter of 63 mm and height of 23 mm were molded.

### Example 20. (Comparative)

Leaf and needle wood shavings and sawdust were dried to moisture content of 16- 20 % and in the quantity of 75 kg were mixed with 25.0 kg of binder, lignin + black sulfate liquor. Paraffin in the quantity of 1% was added and mixed with speed of 20- 60 r.p.m. at temperature 20- 24° C to form relatively homogeneous mass that was then sent to the mold and under pressure of 85 atm. briquettes with diameter of 63 mm and height of 23 mm were molded.

### Example 21. (Comparative)

Leaf and needle wood shavings and sawdust were dried to moisture content of 16- 24 % and in the quantity of 75 kg were mixed with 25.0 kg of binder, lignin + hydrolytic lignin. Paraffin in the quantity of 1% was added and mixed with speed of 20- 60 r.p.m. at temperature 20- 24° C to form relatively homogeneous mass that was then sent to the mold and under pressure of 85 atm. briquettes with diameter of 63 mm and height of 23 mm were molded.

**Table 2**

| | | | |
|---|---|---|---|
| Basic quality values of briquettes manufactured from compositions according examples 1 -22. | | | |

| Example Nº | Briquette quality values | | |
|---|---|---|---|
| | Heat value, cal/g | Ash content, % | Density, g/cm³ |
| 1 | 4874 | 0.91 | 1.12 |
| 2 | 4626 | 0.97 | 1.05 |
| 3 | 5112 | 0.81 | 1.14 |
| 4 | 4923 | 0.92 | 1.11 |
| 5 | 4897 | 0.92 | 1.12 |
| 6 | 6985 | 1.30 | 1.18 |
| 7 | 6790 | 1.20 | 1.17 |
| 8 | 6812 | 0.91 | 1.15 |
| 9 | 6924 | 0.73 | 1.16 |
| 10 | 7036 | 0.84 | 1.12 |
| 11 | 6795 | 0.92 | 1.18 |
| 12 | 6913 | 0.86 | 1.16 |
| 13 | 6950 | 0.75 | 1.17 |
| 14 | 6790 | 0.83 | 1.09 |
| 15 | 6954 | 0.71 | 1.15 |
| 16 | 6124 | 0.95 | 1.07 |
| 17 | 5012 | 0.91 | 1.14 |
| 18. | 7117 | 0.82 | 1.14 |
| 19. | 4516 | 0.97 | 1.13 |
| 20. | 5234 | 0.92 | 1.14 |
| 21. | 5129 | 0.92 | 1.10 |
| A.C.Nº 171828 | 4964 | 1.7 | 0.71 |

It should be noted that use of less than 2.4 mass% of lignin-containing products for manufacture of fuel briquettes results in drastic reduction of density and strength of ready products. Whereas concentration of lignin-containing products over 36.9 mass% becomes economically unfeasible since it does not bring further increase in efficiency of briquette combustion.

Thus, the proposed composition allows manufacture of ecologically clean fuel briquettes from practically any solid secondary carbon-containing feed stock featuring high calorific value (up to 7 000 cal/g), density of 1.04- 1.18 g/cm³, ash content of 0.8- 1.2 %.

Consumption of utilities for manufacture of such fuel might be significantly reduced as compared with the well known processes for manufacture of fuel briquettes through possible avoidance of high-temperature methods.

## Claims

1. Composition for manufacture of fuel briquettes including crushed secondary carbon-containing feed stock selected from petroleum pitch, coal pitch, coal crushed product, crushed peat, wood shavings, sawdust or mixtures thereof, and lignin-containing binder, **characterized in that** it comprises as lignin-containing binder product selected from the group: lignin, lignosulfonate, hydrolytic lignin, black sulfate liquor or mixes thereof and it additionally comprises a binder α-cellulose at mass ratio of lignin-containing product to α-cellulose equal (1ö32): 1 and at mass ratio of secondary carbon-containing feed stock to binder (63.1ö97.6) : (2.4ö36.9), wherein the fuel briquettes are formed by impressing of the mixture under a pressure of at least 85 kg/cm².

2. Composition as per claim 1, **characterized in that** it comprises as lignin-containing binder product lignosulfonates pre-oxidized in acid medium at 120 - 150°C.

3. Composition as per claim 1, **characterized in that** binder comprises supplementary paraffin in the quantity of 0.5ö2.5 mass %.

## Patentansprüche

1. Mischung zur Herstellung von Brennstoffbriketten, umfassend einen zerkleinerten sekundären kohlenstoffhaltigen Rohstoff, der aus der Gruppe Erdölpech, Kohlenpech, zerkleinertes Kohlenprodukt, zerkleinerter Torf, Holzspäne, Sägemehl oder Gemische hiervon ausgewählt ist, und ein ligninhaltiges Bindemittel, **dadurch gekennzeichnet, daß** bei dem ligninhaltigen Bindemittel um ein Produkt handelt, das aus der Gruppe Lignin, Lignosulfonat, Hydrolyselignin, Sulfatschwarzlauge oder Gemische hiervon ausgewählt ist, und daß die Mischung zusätzlich α-Zellstoff als Bindemittel bei einem Massenverhältnis des ligninhaltigen Produkts zum α-Zellstoff im Breich von (1ö32) : 1 und des sekundären kohlenstoffhaltigen Rohstoffs zum Bindemittel im Bereich von (63,1+97,6) : (2,4+36,9) enthält, wobei die Brennstoffbriketten durch Pressen der Mischung unter einem Druck von mindestens 85 kp/cm² geformt werden.

2. Mischung nach Anspruch 1, **dadurch gekennzeichnet, daß** bei dem ligninhaltigen Bindemittel um in einem saueren Medium bei 120 bis 150°C voroxydierte Lignosulfate handelt.

3. Mischung nach Anspruch 1, **dadurch gekennzeichnet, daß** das Bindemittel zusätzlich Paraffin in einer Menge von 0,5 bis 2,5 Gew.% enthält.

## Revendications

1. Composition destinée à former des briquettes combustibles, comprenant une matière première secondaire carbonée concassée choisie dans le groupe: la poix pétrolière, la poix de charbon, le produit de charbon concassé, la tourbe concassée, une planure de bois, un bran de scie ou leurs mélanges, et un liant contenant de la lignine, **caractérisée en ce qu'**à titre de liant contenant de la lignine elle comprend un produit choisi dans le groupe: la lignine, la lignosulfonate, la lignine hydrolytique, la lessive noire de sulfate ou leurs mélanges et en addition elle contient un liant α - cellulose en rapport pondéral: produit contenant de la lignine/α - cellulose = (1-32)/1 respectivement et matière première secondaire carbonée / liant = (63,1 - 97,6) / (2,4 - 36,9); des briquettes combustibles étant formées par le pressage du mélange sous pression égale au moins à 85 kg/ cm2.

2. Composition selon la revendication 1, **caractérisée en ce qu'**à titre de liant contenant de la lignine elle comprend des lignosulfonates préalablement oxydées dans le milieu acide à la température comprise entre 120°C et 150°C.

3. Composition selon la revendication 1, **caractérisée en ce que** le liant contient en outre 0,5 - 2,5% en poids de la paraffine.
